# EUROPEAN PATENT APPLICATION

(11) **EP 1 862 843 A1**
(43) Date of publication of application: **05.12.2007**
(21) Application number: 06124140.2
(22) Date of filing: 15.11.2006
(51) Int. Cl.: G02F 1/13357, G02B 26/10

(54) **Scanning backlight unit and display apparatus having the same**

(30) Priority: 29.05.2006 KR 20060048322
(71) Applicant: Samsung Electronics Co., Ltd, Suwon-si, Gyeonggi-do 442-742 (KR)
(72) Inventor: Lee, Kye-hoon, Gyeonggi-do (KR); Cho, Kun-ho, Gyeonggi-do (KR)
(74) Representative: Robinson, Ian Michael

(57) **Abstract**

A display apparatus includes a display panel (110), and a backlight unit to supply light to the display panel (110) . The backlight unit includes a light source (100), a light deflecting unit (200) to deflectively scan light irradiated from the light source (100), and a light reflecting unit (300) to reflect the light scanned by the light deflecting unit (200) toward the display panel (110). According to the display apparatus, the number of parts in the backlight unit is reduced, thereby allowing a structure of the backlight unit to be simplified and allowing a thickness of the display apparatus to be reduced.

## Description

The present invention relates to a backlight unit and a display apparatus having the same.

Generally, a liquid crystal display (LCD) apparatus includes an LCD panel, which is provided with a plurality of liquid crystal cells arranged in the shape of a matrix, and a plurality of control switches to switch video signals to be supplied to the respective liquid crystal cells. The LCD panel displays a desired image on a screen that adjusts a transmitting amount of light supplied from a backlight unit.

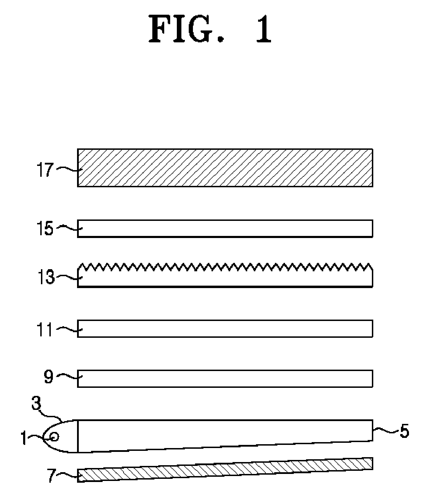

As illustrated in Figure 1, a general backlight unit includes a light source 1, a housing 3, a light guide plate 5, a reflective plate 7, a first diffusing plate 9, first and second prisms 11 and 13, and a second diffusing plate 15. The light source 1 emits light. The housing 3 is installed in a shape that surrounds the light source 1. The light guide plate 5 converts the light emitted from the light source 1 into planar light. The reflective plate 7 is located below the light guide plate 5 to reflect light, which proceeds to an undersurface and side surfaces of the light guide plate 5, toward an upper surface of the light guide plate 5. The first diffusing plate 9 diffuses the light guided via the light guide plate 5. The first and the second prisms 11 and 13 adjust a traveling direction of the light diffused via the first diffusing plate 9. The second diffusing plate 15 diffuses the light that has passed through the second prism 13.

The conventional backlight unit as described above usually uses a coldcathode-fluorescent lamp as a light source. Accordingly, to prevent the light from being lost in the lamp and to uniformly diffuse the light to an LCD panel 17, it is necessary to install a plurality of parts as described above between the light source 1 and the LCD panel 17. Thus, a problem occurs in that the structure is complicated. Also, because the light emitted from the lamp passes through the plurality of parts as described above, a problem occurs in that a transmission efficiency of light is reduced, thereby deteriorating an image in quality.

To address those problems, a backlight unit using a laser as a light source has been proposed and disclosed in a Korean patent publication No. 10-2005-0060961. As illustrated in Figure 2, the backlight unit using the laser includes a laser source 21, a driving mirror 23 installed opposite to an LCD panel 25 to rotate on an axle right and left and thus to reflect and scan a laser beam irradiated from the laser source 21 to be scanned from one side to the other side of the LCD panel 25, and a rotation driving part (not illustrated) to rotate the driving mirror 23.

Because the backlight unit using the laser as described above uses the laser having a superior light linearity as the light source, the reflective plate, the light guide plate, the diffusing plates, and the prisms between the light source 21 and the LCD panel 25 do not need to be installed. Accordingly, the backlight unit using the laser has fewer parts, a more simplified structure, and a more improved transmission efficiency of light compared with the backlight unit using the fluorescent lamp as the light source.

However, because the backlight unit using the laser includes the driving mirror 23 and the rotation driving part installed to face the LCD panel 25, it presents a problem in that a thickness of the display apparatus is increased.

Accordingly, a need exists for an improved backlight unit having a simplified structure and a reduced size.

According to the present invention there is provided an apparatus and method as set forth in the appended claims. Preferred features of the invention will be apparent from the dependent claims, and the description which follows.

An exemplary embodiment of the present invention provides a backlight unit that reduces the number of parts installed therein, thereby allowing a structure to be simplified and allowing a thickness of a display apparatus to be reduced, and a display apparatus having the same.

According to one aspect of an exemplary embodiment of the present invention, a backlight unit includes a light source, a light deflecting unit to deflectively scan light irradiated from the light source, and a light reflecting unit to reflect the light scanned by the light deflecting unit toward a display panel.

The light reflecting unit may include a reflective mirror disposed at the rear of the display panel.

The reflective mirror may be inclined at a predetermined angle with respect to the display panel.

The backlight unit may further include a lens unit to bring the light reflected by the light reflecting unit to be incident at substantially right angles on the display panel.

The lens unit may include a fresnel lens disposed between the display panel and the light reflecting unit.

The backlight unit may be configured such that the light source includes a plurality of light sources and the light deflecting unit includes a plurality of light deflecting units.

The display panel may be a liquid crystal display (LCD) panel, and the light source may be a laser source.

According to one aspect of another exemplary embodiment of the present invention, the light reflecting unit includes a first reflective mirror disposed at the rear of the display panel, and a second reflective mirror (320) disposed at a lower side of the first reflective mirror to reflect the light scanned by the light deflecting unit toward the first reflective mirror.

The first reflective mirror may be a substantially planar mirror, and the second mirror may be a curved surface mirror.

The first reflective mirror may be inclined at a predetermined angle with respect to the display panel.

The backlight unit may further includes a lens unit disposed between the display panel and the first reflective mirror to bring the light reflected by the first reflective mirror to be incident at substantially right angles on the display panel.

According to one aspect of still another exemplary embodiment of the present invention, the backlight unit further includes a light focus controlling unit disposed between the light deflecting unit and the light reflecting unit to adjust a focus of a lens to position a luminous point in the light deflecting unit.

The light focus controlling unit may include a field lens in which a plurality of convex and concave lenses are arranged.

According to one aspect of still another exemplary embodiment of the present invention, the backlight unit further includes a light intensity controlling unit to adjust an intensity of the light source according to a light scanning position of the display panel.

According to another aspect of an exemplary embodiment of the present invention, a display apparatus includes a display panel, and a backlight unit having the same structure as described above to supply light to the display panel.

Other objects, advantages and salient features of the invention will become apparent from the following detailed description, which, taken in conjunction with the annexed drawings, discloses exemplary embodiments of the invention.

These and/or other aspects and advantages of certain exemplary embodiments of the present invention will become apparent and more readily appreciated from the following description of the exemplary embodiments, taken in conjunction with the accompanying drawings, of which:
Figure 1 is a schematic view exemplifying a conventional general backlight unit;

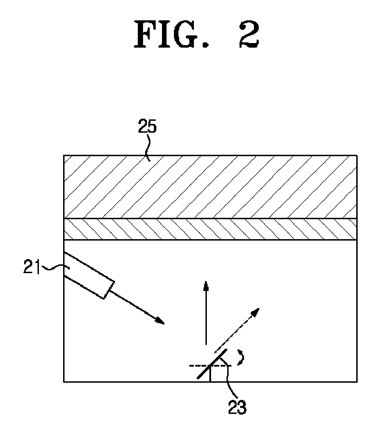

Figure 2 is a schematic view exemplifying a general backlight unit using a laser source;
Figure 3 is a schematic view exemplifying a display apparatus to which a backlight unit according to a first exemplary embodiment of the present invention is applied;
Figure 4 is a schematic view exemplifying a display apparatus to which a backlight unit according to a second exemplary embodiment of the present invention is applied;
Figure 5 is a schematic view exemplifying a display apparatus to which a backlight unit according to a third exemplary embodiment of the present invention is applied;
Figure 6 is a schematic view exemplifying a display apparatus to which a backlight unit according to a fourth exemplary embodiment of the present invention is applied; and
Figure 7 is a schematic view exemplifying a display apparatus to which a backlight unit according to a fifth exemplary embodiment of the present invention is applied.

Throughout the drawings, the same drawing reference numerals will be understood to refer to the same elements, features, and structures.

Hereinafter, a backlight unit according to exemplary embodiments of the present invention and a display apparatus having the same are described in greater detail with reference to the accompanying drawings.

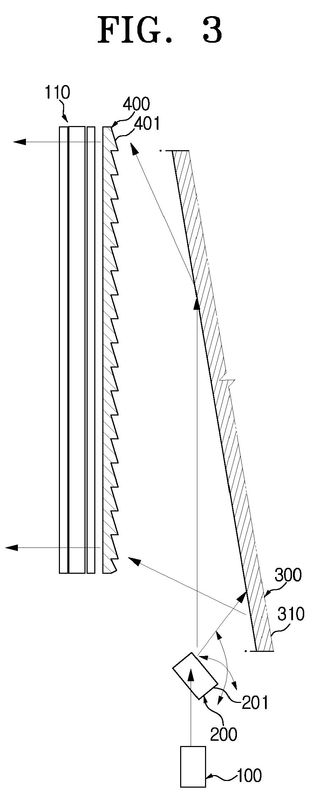

Figure 3 is a schematic view exemplifying a display apparatus to which a backlight unit according to a first exemplary embodiment of the present invention is applied.

As illustrated in Figure 3, the back light unit according to the first exemplary embodiment of the present invention includes a light source 100, a light deflecting unit 200, and a light reflecting unit 300.

The light source 100 uses a laser having superior light linearity. In this exemplary embodiment, the light source 100 is illustrated and explained as a single white light source W, which emits a white light, that is, a laser beam, but the present invention is not so limited. For instance, the light source 100 may be configured, such that three light sources, for example, a red light source R, a green light source G, and a blue light source B form a white light emitting a red laser beam R, a green laser beam G, and a blue laser beam B, respectively.

The light deflecting unit 200 deflectively scans a laser beam irradiated from the light source 100. The light deflecting unit 200 is provided with a light deflecting member 201 rotatably disposed on a laser beam path from the light source 100, and a rotation driving part (not illustrated) to rotate the light deflecting member 201 up and down and right and left. In this exemplary embodiment, the light deflecting unit 200 is configured so that a single light deflecting unit is installed corresponding to the single white light source of the light source 100. However, like the light source 100, the light deflecting unit 200 may be configured so that a plurality of light deflecting units, for example, three light deflecting units are installed corresponding to the three light sources including the red light source, the green light source, and the blue light source.

The light reflecting unit 300 reflects the laser beam scanned from the light deflecting unit 200 toward a region of a display panel. Preferably, but not necessarily, the display panel is made up of a liquid crystal display (LCD) panel 110. The light reflecting unit 300 includes a first reflective mirror 310 disposed between the LCD panel 110 and the light deflecting unit 200 to face the LCD panel 110.

The first reflective mirror 310 has a substantially flat reflective surface, which faces the LCD panel 110. Preferably, but not necessarily, the first reflective mirror 310 is installed so that it is inclined at a predetermined angle to the LCD panel 110, as shown in Figure 3.

A lens unit 400 is disposed between the LCD panel 110 and the first reflective mirror 310. The lens unit 400 brings the laser beam reflected from the first reflective mirror 310 to be incident at a substantially right angle on the LCD panel 110. Preferably, but not necessarily, the lens unit 400 is made up of a fresnel lens 401. The fresnel lens 401 is a lens in which several portions divided in the shape of a band have prism functions, respectively, thereby reducing light aberration. Because a structure of the fresnel lens 401 is substantially identical to that of a conventional fresnel lens known in the art, a detailed description thereof is omitted for the sake of brevity.

An operation of the backlight unit according to the first exemplary embodiment of the present invention constructed as described above is as follows. First, the light deflecting unit 200 deflectively scans a laser beam irradiated from the light source 100 while rotating. The laser beam scanned from the light deflecting unit 200 is reflected by the first reflective mirror 310 disposed opposite to the LCD panel 110 and between the LCD panel 110 and the light deflecting unit 200, so that it is scanned from one side to the other side of the LCD panel 110. The fresnel lens 401 brings the laser beam reflected from the first reflective mirror 310 to be incident at a substantially right angle on the LCD panel 110. When the laser beam is incident on the LCD panel 110, the LCD panel 110 properly adjusts transmissivities of R, G and B by pixels, thereby realizing an image.

According to the first exemplary embodiment of the present invention, the backlight unit uses a laser having superior light linearity, so that the laser beam scanned to the LCD panel 110 forms a uniform white light. Accordingly, the backlight unit according to the first exemplary embodiment of the present realizes a clear image on the LCD panel 110.

Furthermore, according to the first exemplary embodiment of the present, the backlight unit is configured so that the light deflecting unit 200 and the light reflecting unit 300 are installed between the light source 100 and the LCD panel 110. Accordingly, the backlight unit according to the first exemplary embodiment of the present invention has fewer parts, a more simplified structure, and a more superior transmission efficiency of the laser beam than the conventional backlight unit for an LCD including the reflective plate, the light guide plate, the diffusion plates, the prisms, and so forth.

According to the first exemplary embodiment of the present invention, the backlight unit is configured so that the first reflective mirror 310 is installed opposite to the LCD panel 110 and between the LCD panel 110 and the light deflecting unit 200. Accordingly, the laser beam scanned from the light deflecting unit 200 is reflected and scanned from one side to the other side of the LCD panel 110. Thus, the backlight unit according to the first exemplary embodiment of the present invention does not need to install the light deflecting unit 200 to face the LCD panel 110, thereby enabling a thickness of a display apparatus to be reduced.

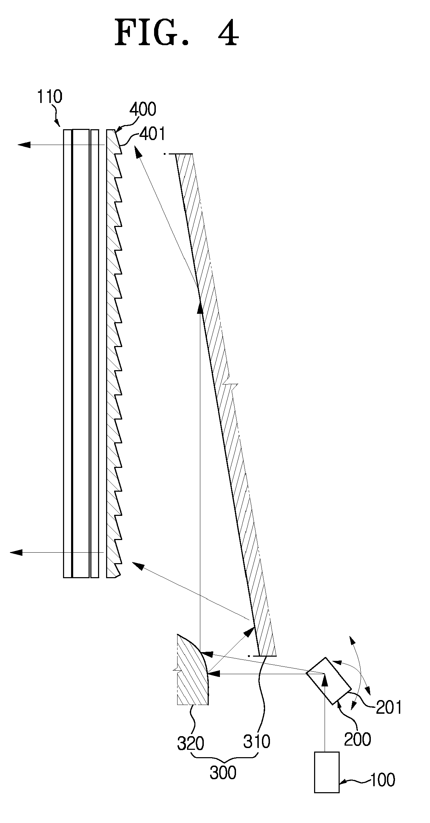

Figure 4 is a schematic view exemplifying a display apparatus to which a backlight unit according to a second exemplary embodiment of the present invention is applied.

As illustrated in Figure 4, a construction of the backlight unit of the second exemplary embodiment is substantially similar to that of the backlight unit of the first exemplary embodiment explained with reference to FIG. 3, except that the light reflecting unit 300 is made up of a first reflective mirror 310 and a second reflective mirror 320. Accordingly, elements carrying out functions similar to those of the backlight unit of the first exemplary embodiment are designated with the same reference numerals, and descriptions of functions and constructions thereof are omitted for clarity and conciseness.

The second reflective mirror 320 is installed between the light deflecting unit 200 and the first reflective mirror 310. Preferably, but not necessarily, the second reflective mirror 320 has a reflective surface formed in the shape of a curved surface having a predetermined curvature.

An operation of the backlight unit of the second exemplary embodiment constructed as described above is substantially similar to that of the backlight unit of the first exemplary embodiment explained with reference to Figure 3. However, a laser beam scanned from the light deflecting unit 200 is reflected toward a region of the first reflective mirror 310 by the second reflective mirror 320 disposed between the LCD panel 110 and the light deflecting unit 200, and then again reflected by the first reflective mirror 310 to be scanned from one side to the other side of the LCD panel 110. The second reflective mirror 320 changes a path of the laser beam scanned by the light deflecting unit 200, so that a uniform image may be realized on the LCD panel 110. Because the path of the laser beam may be changed by the second reflective mirror 320, the thickness of the display apparatus may be reduced.

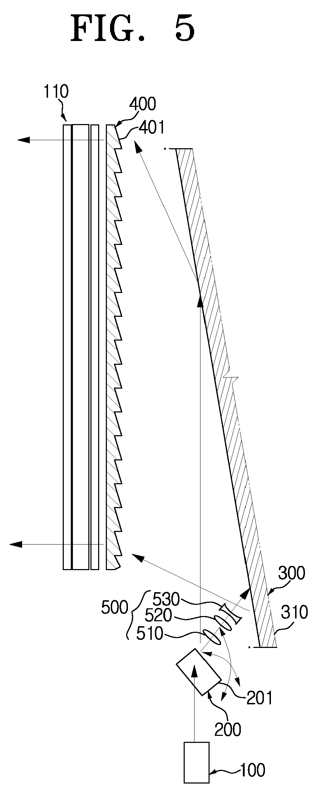

Figure 5 is a schematic view exemplifying a display apparatus to which a backlight unit according to a third exemplary embodiment of the present invention is applied.

As illustrated in Figure 5, a construction of the backlight unit of the third exemplary embodiment is substantially similar to that of the backlight unit of the first exemplary embodiment explained with reference to FIG. 3, except that a light focus controlling unit 500 is installed between the light deflecting unit 200 and the first reflective mirror 310. Accordingly, elements carrying out functions similar to those of the backlight unit of the first exemplary embodiment are designated with the same reference numerals, and descriptions of functions and constructions thereof are omitted for clarity and conciseness.

Preferably, but not necessarily, the light focus controlling unit 500 is made up of a field lens in which convex lenses 510 and 520 and a concave lens 530 are arranged. The field lens is configured such that a focus of the field lens is positioned in the light deflecting unit 200.

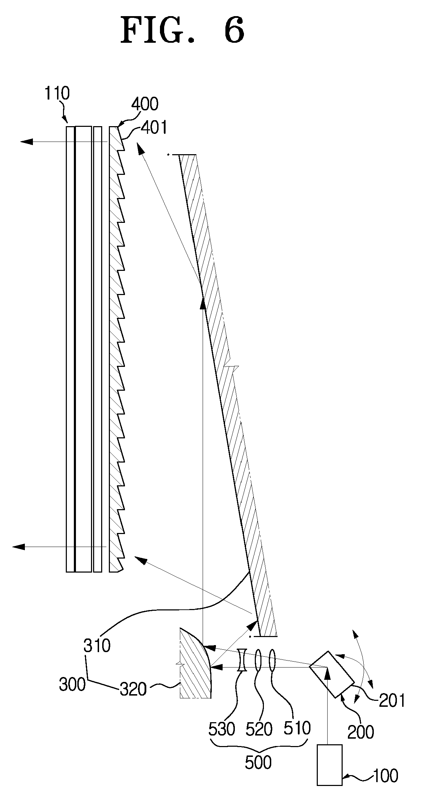

Figure 6 is a schematic view exemplifying a display apparatus to which a backlight unit according to a fourth exemplary embodiment of the present invention is applied.

As illustrated in Figure 6, a construction of the backlight unit of the fourth exemplary embodiment is substantially similar to that of the backlight unit of the second exemplary embodiment explained with reference to Figure 4, except that a light focus controlling unit 500 is installed between the light deflecting unit 200 and the second reflective mirror 320. Accordingly, elements carrying out functions similar to those of the backlight unit of the second exemplary embodiment are designated with the same reference numerals, and descriptions of functions and constructions thereof are omitted for clarity and conciseness.

Operations of the backlight units of the third and the fourth exemplary embodiments constructed as described above are substantially similar to those of the backlight units of the first and the second exemplary embodiments explained with reference to Figures 3 and 4. However, a laser beam scanned by the light deflecting unit 200 forms a beam spot on a certain position of the LCD panel 110 passing through the light focus controlling unit 500. Accordingly, a more clear image may be realized.

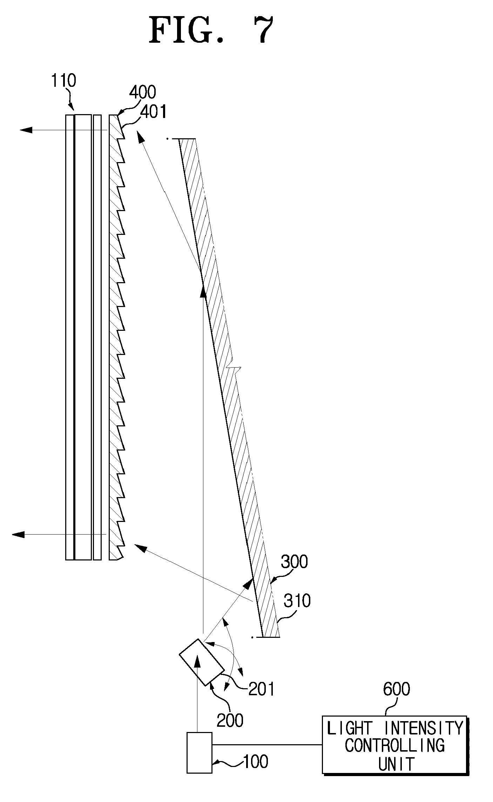

Figure 7 is a schematic view exemplifying a display apparatus to which a backlight unit according to a fifth exemplary embodiment of the present invention is applied.

As illustrated in Figure 7, a construction of the backlight unit of the fifth exemplary embodiment is substantially similar to that of the backlight unit of the first exemplary embodiment explained with reference to Figure 3, except that it further includes a light intensity controlling unit 600. Accordingly, elements carrying out functions similar to those of the backlight unit of the first exemplary embodiment are designated with the same reference numerals, and descriptions of functions and constructions thereof are omitted for clarity and conciseness.

The light intensity controlling unit 600 adjusts an intensity of the light source 100 according to a light scanning position of the LCD panel 110. For instance, the light intensity controlling unit 600 changes an intensity of the light source 100 coping with a scanning timing, according to the light scanning position of the LCD panel 110.

Operation of the backlight unit of the fifth exemplary embodiment constructed as described above is substantially similar to that of the backlight unit of the first exemplary embodiment explained with reference to FIG. 3. However, because the light intensity controlling unit 600 may adjust an intensity of the light source 100 according a light scanning position of the LCD panel 110, it is possible to adjust a backlight luminance to a local region of the LCD panel 110.

As apparent from the foregoing description, according to the exemplary embodiments of the present invention, the backlight unit and the display apparatus having the same use a laser having superior light linearity as the light source. Accordingly, the backlight unit and the display apparatus having the same according to the exemplary embodiments of the present invention may realize a clear image on the LCD panel.

Furthermore, according to the exemplary embodiments of the present invention, the backlight unit and the display apparatus having the same may adjust the intensity of the light source according to the light scanning position of the LCD panel. Accordingly, the backlight unit and the display apparatus having the same according to the exemplary embodiments of the present invention may adjust the backlight luminance to the local region of the LCD panel.

Also, according to the exemplary embodiments of the present invention, the backlight unit and the display apparatus having the same may reduce the number of parts installed between the light source and the LCD panel, thereby allowing a structure to be simplified and allowing the light transmission efficiency to be improved.

Also, according to the exemplary embodiments of the present invention, the backlight unit and the display apparatus having the same do not need to install the light deflecting unit to face the LCD panel, thereby enabling the thickness of the display apparatus to be reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A backlight unit, comprising:
a light source (100);
a light deflecting unit (200) to deflectively scan light irradiated from the light source (100); and
a light reflecting unit (300) to reflect the light scanned by the light deflecting unit (200) toward a display panel (110).

2. The backlight unit as claimed in claim 1, wherein the light reflecting unit (300) comprises a reflective mirror (310) disposed at the rear of the display panel (110).

3. The backlight unit as claimed in claim 2, wherein the reflective mirror (310) is inclined at an angle with respect to the display panel (110).

4. The backlight unit as claimed in claim 1, 2 or 3, further comprising a lens unit (400) to bring the light reflected by the light reflecting unit (300) to be incident at substantially right angles on the display panel (110).

5. The backlight unit as claimed in claim 4, wherein the lens unit (400) comprises a fresnel lens (401) disposed between the display panel (110) and the light reflecting unit (300).

6. The backlight unit as claimed in any preceding claim, wherein the light source (100) comprises a plurality of light sources.

7. The backlight unit as claimed in claim 6, wherein the light deflecting unit (200) comprises a plurality of light deflecting units.

8. The backlight unit as claimed in any preceding claim, wherein the display panel (110) comprises a liquid crystal display (LCD) panel.

9. The backlight unit as claimed in any preceding claim, wherein the light source (100) comprises a laser source.

10. The backlight unit as claimed in any preceding claim, wherein the light reflecting unit (300) comprises:
a first reflective mirror (310) disposed at the rear of the display panel (110); and
a second reflective mirror (320) disposed at a lower side of the first reflective mirror (310) to reflect the light scanned by the light deflecting unit (200) toward the first reflective mirror (310).

11. The backlight unit as claimed in claim 10, wherein the first reflective mirror (310) comprises a substantially planar mirror, and the second reflective mirror (320) comprises a curved surface mirror.

12. The backlight unit as claimed in claim 11, wherein the first reflective mirror (310) is inclined at an angle with respect to the display panel (110).

13. The backlight unit as claimed in claim 10, further comprising a lens unit (400) disposed between the display panel (110) and the first reflective mirror (310) to bring the light reflected by the first reflective mirror (310) to be incident at substantially right angles on the display panel (110) .

14. The backlight unit as claimed in any preceding claim, further comprising a light focus controlling unit (500) disposed between the light deflecting unit (200) and the light reflecting unit (300) to adjust a focus of the light focus controlling unit (500) to position a luminous point in the light deflecting unit (200).

15. The backlight unit as claimed in claim 14, wherein the light focus controlling unit (500) comprises a field lens (510, 520, 530) in which a plurality of convex and concave lenses are arranged.

16. The backlight unit as claimed in any preceding claim, further comprising a light intensity controlling unit (600) to adjust an intensity of the light source (100) according to a light scanning position of the display panel (110).

17. A display apparatus, comprising:
a display panel (110); and
a backlight unit to supply light to the display panel (110), wherein the backlight unit comprises
a light source (100);
a light deflecting unit (200) to deflectively scan light irradiated from the light source (100); and
a light reflecting unit (300) to reflect the light scanned by the light deflecting unit (200) toward the display panel (110).

18. The apparatus as claimed in claim 17, wherein the light reflecting unit (300) comprises a reflective mirror (310) disposed at the rear of the display panel (110).

19. The apparatus as claimed in claim 18, wherein the reflective mirror (310) is inclined at an angle with respect to the display panel (110).

20. The apparatus as claimed in claim 17, further comprising a lens unit (400) to bring the light reflected by the light reflecting unit (300) to be incident at substantially right angles on the display panel (110).

21. The apparatus as claimed in claim 20, wherein the lens unit (400) comprises a fresnel lens (401) disposed between the display panel (110) and the light reflecting unit (300).

22. The apparatus as claimed in claim 17, wherein the light source (100) comprises a plurality of light sources.

23. The apparatus as claimed in claim 22, wherein the light deflecting unit (200) comprises a plurality of light deflecting units.

24. The apparatus as claimed in claim 17, wherein the display panel (110) comprises a liquid crystal display (LCD) panel.

25. The apparatus as claimed in claim 17, wherein the light source (100) comprises a laser source.

26. The apparatus as claimed in claim 17, further comprising a light focus controlling unit (500) disposed between the light deflecting unit (200) and the light reflecting unit (300) to adjust a focus of the light focus controlling unit (500) to position a luminous point in the light deflecting unit (200).

27. The apparatus as claimed in claim 17, further comprising a light intensity controlling unit (600) to adjust an intensity of the light source (100) according to a light scanning position of the display panel (110).

28. A display apparatus, comprising:
a light source (100);
a display panel (110);
a light deflecting unit (200) to deflectively scan light irradiated from the light source (100);
a light reflecting unit (300) to reflect the light scanned by the light deflecting unit (200) toward the display panel (110); and
a lens unit (400) to bring the light reflected by the light reflecting unit (300) to be incident at substantially right angles on the display panel (110).

29. The display apparatus according to claim 28, wherein the light reflecting unit (300) includes a reflective mirror (310) disposed rearwardly of the display panel (110).

30. The display apparatus according to claim 29, wherein the reflective mirror (310) is inclined at an angle with respect to the display panel (110).

31. The display apparatus according to claim 28, wherein the lens unit (400) includes a fresnel lens (401) disposed between the display panel (110) and the light reflecting unit (300).

32. The display apparatus according to claim 28, wherein the light source (100) includes a plurality of light sources.

33. The display apparatus according to claim 32, wherein the light deflecting unit (200) comprises a plurality of light deflecting units.

34. The display apparatus according to claim 28, wherein the display panel (110) includes a liquid crystal display (LCD) panel.

35. The display apparatus according to claim 28, wherein the light source (100) includes a laser source.

36. The display apparatus according to claim 28, wherein the light reflecting unit (300) includes
a first reflective mirror (310) disposed rearwardly of the display panel (110); and
a second reflective mirror (320) disposed at a lower side of the first reflective mirror (310) to reflect the light scanned by the light deflecting unit (200) toward the first reflective mirror (310).

37. The display apparatus according to claim 36, wherein the first reflective mirror (310) is a substantially planar mirror, and the second reflective mirror (320) is a curved surface mirror.

38. The display apparatus according to claim 37, wherein the first reflective mirror (310) is inclined at an angle with respect to the display panel (110).

39. The display apparatus according to claim 28, further comprising a light focus controlling unit (500) disposed between the light deflecting unit (200) and the light reflecting unit (300) to adjust a focus of the light focus controlling unit (500) to position a luminous point in the light deflecting unit (200).

40. The display apparatus according to claim 39, wherein the light focus controlling unit (500) includes a field lens (510, 520, 530) in which a plurality of convex and concave lenses are arranged.

41. The display apparatus according to claim 28, further comprising a light intensity controlling unit (600) to adjust an intensity of the light source (100) according to a light scanning position of the display panel (110).
